Europäisches Patentamt

European Patent Office

Office européen des brevets

(19)

(11) Veröffentlichungsnummer: **0 234 461**
**B1**

(12) **EUROPÄISCHE PATENTSCHRIFT**

(45) Veröffentlichungstag der Patentschrift: **09.05.90**

(51) Int. Cl.⁵: **B 27 K 3/50**, B 27 K 3/52

(21) Anmeldenummer: **87102113.5**

(22) Anmeldetag: **14.02.87**

(54) Holzschutzmittel.

(30) Priorität: **18.02.86 DE 3605008**

(43) Veröffentlichungstag der Anmeldung:
**02.09.87 Patentblatt 87/36**

(45) Bekanntmachung des Hinweises auf die
Patenterteilung:
**09.05.90 Patentblatt 90/19**

(84) Benannte Vertragsstaaten:
**AT BE CH DE ES FR GB GR IT LI NL SE**

(56) Entgegenhaltungen:
**WO-A-82/03817**
**DE-B-1 817 579**
**DE-C-2 410 603**

(73) Patentinhaber: **Dr. Wolman GmbH**
**Dr.-Wolman-Strasse 31-33**
**D-7573 Sinzheim (DE)**

(72) Erfinder: **Goettsche, Reimer, Dr.**
**Waldstrasse 27**
**D-7570 Baden-Baden 19 (DE)**
Erfinder: **Marx, Hans-Norbert**
**Mozartweg 8**
**D-7580 Buehl-Weitenung (DE)**

(74) Vertreter: **Schweiss, Werner, Dr. et al**
**BASF Aktiengesellschaft Patentabteilung Carl-Bosch-Strasse 38**
**D-6700 Ludwigshafen (DE)**

Courier Press, Leamington Spa, England.

**Beschreibung**

Die Erfindung bezieht sich auf die Bereitstellung von Mitteln zur Behandlung von (massivem) Holz auf der Grundlage wäßriger Zubereitungen von Di-(N-cyclohexyldiazeniumdioxy)-Kupfer Polyamin und komplexbildender Carbonsäure und gegebenenfalls weiterer Bestandteile, insbesondere fungizid wirkenden Salzen, deren Wirkung auf dem Anion beruht, wie borsauren Salzen.

Es ist bekannt, die Imprägnierung von Holz mit wasserlöslichen Komplexverbindungen des Di-(N-cyclohexyldiazeniumdioxy)-Kupfer (abgekürzt Cu-HDO) durchzuführen (frühere Bezeichnung: N-Nitroso-cyclohexylhydroxylamin Kupfer-Salz).

Von den bekannten Komplexbildnern eignen sich zur Herstellung der wasserlöslichen Komplex-Verbindungen vor allem die Polyamine, z.B. Äthylendiamin, Diäthylentriamin, Dipropylentriamin. Bei der Imprägnierung von Holz im großtechnischen Verfahren, dem Kesselvakuumdruckverfahren, mit wäßrigen Lösungen der bekannten wasserlöslichen Komplexverbindungen war die Eindringung und die Schutzmittelverteilung des Cu-HDO nicht ausreichend, um den notwendigen Holzschutz z.B. bei Rundhölzern, wie Masten oder Palisaden, bei Verwendung mit Erdkontakt (z.B. als Telegrafenstangen) auf Dauer zu gewährleisten. Es wurde bei gut imprägnierten Kieferrunghölzern mit ausreichendem Splintholz (mehr als 3 cm) nur eine Eindringung des Cu-HDO on 10 bis 15 mm erreicht. Die alkalischen Lösungen des komplexierten Cu-HDO (pH-Wert ca. 9 bis 10) reagierten offenbar mit den sauren Holzbestandteilen bereits während der Imprägnierung in der Weise, daß die Lösungen nicht tief in das Holz eindringen können.

Andererseits ist das Komplexbildungsvermögen saurer Komplexbildner des Kupfers, wie Weinsaüre, Milchsäure, Nitrilotriessigsäure, aber auch anderer Amine z.B. Monoaminen wie Ethanolamin nicht ausreichend, um stabile wäßrige, saure oder alkalische Lösungen von Cu-HDO zu erhalten. Das Cu-HDO fällt nach kürzerem oder längerem Stehen aus den wäßrigen Lösungen aus.

Es wurde gefunden, daß di obengenannten Nachteile nicht auftreten, wenn man eine wäßrige Lösung für die Imprägnierung verwendet, die durch Verdünnung mit Wasser aus einem Holzschutzmittel erhalten wird, das neben Cu-HDO ein Polyamin und eine komplexbildende Carbonsaüre in einer solchen Menge enthält, daß sich beim Verdünnen des Mittels mit Wasser auf eine Konzentration von 0,3 bis 1,5 % (Gewichtsprozent) Kupfer in der Wäßrigen Lösung ein pH-Wert von mindestens 7,5 einstellt.

Ein Polyamin ist beispielsweise ein Di- oder Triamin z.B. Diethylentriamin(2,2'-Diaminodiethylamin), Dipropylentriamin(3,3'-Diaminodipropylamin). Ethylendiamin, 1,2-Propylendiamin und 1,3-Diaminopropan sind ebenfalls brauchbar, aber die damit hergestellten Holzschutzmittel (Konzentrate) kristallisieren bei tieferen Temperaturen (0°C) unter Entstehung fester Kristalle aus und lassen sich daher unter diesen Bedingungen nur schlecht anwenden (mit Wasser verdünnen).

Eine komplexbildende Carbonsäure ist eineCarbonsäure,die mit Kupferverbindungen Komplexe bildet, beispielsweise eine Hydroxycarbonsäure z.B. Milchsäure, Weinsäure oder eine stickstoffhaltige komplexbildende Polycarbonsäure z.B. Nitrilotriessigsäure.

Die Holzschutzmittel können auch noch ein Alkanolamin z.B. Ethanolamin, Aminoethylethanolamin, Isopropanolamin, eine Verbindung mit einem fungizidwirkenden Anion beispielsweise eine Borverbindung, beispielsweise ein borsaures Salz, z.B. Borax, Borsäure oder Ammoniumtetrafluoroborat oder ein quartäres Ammoniumsalz oder eine Mischung dieser Stoffe enthalten.

Die wasserverdünnbaren Mittel enthalten — in konzentrierter Form — das Kupfer, berechnet als Element, i.a. in einer Menge von 1 bis 15 Gewichtsprozent.

Geeignete Konzentrate enthalten beispielsweise (jeweils Gewichtsprozent)

5 bis 50% Cu-HDO

5 bis 40% Polyamin

5 bis 30% komplexbildende Carbonsäure

bis zu 20% Verbindung miet einem fungizid wirkenden Anion

bis zu 20% Alkanolamin

bis zu 50% eines quaternären Ammoniumsalzes, wobei die Summe jeweils 100 (Gew.-%) ergibt sowie gegebenenfalls untergeordnete Mengen an anderen Bestandteilen, wie Aminen, Ammoniak, Korrosionsinhibitoren und erforderlichenfalls Wasser, dessen Anteil jedoch i.a. gering gehalten werden kann und im wesentlichen der Handhabung dient. Die Erfindung erstreckt sich jedoch gleichermaßen auf die durch Verdünnung mit Wasser herstellbaren Imprägnierlösungen entspechend geringerer Einzelkonzentration.

Durch die Komplexbildung mit dem Polyamin und der Eindrigtiefe des Holzschutzmittels wird das Eindringvermögen des Holzschutzmittels erhöht, die imprägnierbaren Teile des Holzes werden voll druchtränkt und es wird ein ausreichender Holzschutz erzielt.

Durch einen Zusatz von Borsäure zu den erfindungsgemäßen Mitteln werden auch Holzbereiche durch Diffusion geschützt, die einer Imprägnierung nicht zugänglich sind (Kernholz).

Die erfindungsgemäßen Mittel lassen sich auch gut mit quartären Ammoniumverbindungen mischen.

Geeignete quaternäre Ammoniumsalze sind z.B. solche, die der allgemeinen Formel $(R^1R^2R^3R^4N)^+Z^-$ entsprechen, wobei

$R^1$ einen Alkylrest mit 8 bis 20 Kohlenstoffatomen, einen Alkenylrest mit 12 bis 20 Kohlenstoffatomen oder einen Benzylrest bedeutet, der gegebenenfalls durch $C_1$—$C_{20}$-Alkyl oder Halogen substituiert ist,

$R^2$ $C_1$—$C_6$-Alkyl,

2

$R^3$ $C_1$—$C_6$-Alkyl,

$R^4$ $C_1$—$C_{20}$-Alkyl bedeuten

oder je zwei der Reste $R^1$ bis $R^4$ zusammen mit dem Stickstoffatom einen heterocyclischen Rest bilden, der 4 bis 5 C—Atome, 1 bis 2 N—Atome und eine oder zewi Doppelbindungen enthält, wobei die Kohlenstoffatome gegebenenfalls durch $C_1$—$C_4$-Alkyl oder Halogen substituiert sind und Z einen Säurerest bedeutet.

Durch Auflösen der Kupferverbindung in dem Polyamin und der Komplexbildenen Carbonsäure, gegebenenfalls unter Wasserzusatz, entstehen hochkonzentrierte wasserlösliche Pasten oder flüssige Konzentrate, die in Wasser gelöst zum Imprägnieren von Holz verwendet werden können. Der pH-Wert der wäßrigen Imprägnierlösungen liegt im allgemeinen zwischen 8,0 und 10,0 insbesondere 8,5 und 9,5. Durch Zusatz von Säuren kann in der Lösung gegebenenfalls auch ein pH-Wert um 8 oder darunter eingestellt werden, Voraussetzung ist, daß die Ausfällung des Cu-HDO bei einem um mindestens 1 kleineren pH-Wert beginnt (konzentrationsabhängig).

Die Menge der verwendeten Polyamine und komplexbildenden Carbonsäuren wird so bemessen, daß sie einmal zur Komplexbildung des Kupfers ausreicht und sich andererseits gegebenenfalls Salze der zusätzlich verwendeten fungiziden Anionen (Borat, Fluoroborat) bilden, so daß sich in der wäßrigen IImprägnierlösung ein pH-Wert von 7,5 oder mehr, vorzugsweise pH 8,5 bis 9,5 einstellt.

Die Erfindung wird an den folgenden Beispielen erläutert.

I. Beschreibung der Versuchsdurchführung

Für die Versuche wurden Fichtenrundhölzer verwendet, die im Bohrverfahren mechanisch vorbehandelt wurden. Die Tränkung der Rundhölzer erfolgte im Kesseldruckverfahren. (Abmessung der Rundhölzer: Länge 1,20 m, mittlerer Durchmesser 0,20 m, Länge des perforierten Bereiches 0,90 m, Perforationstiefe 3 cm). Fichtenholz ist schwer tränkbar aufgrund seiner Zellstruktur, durch mechanische Perforation läßt sich das Holz jedoch in seiner Imprägnierbarkeit verbessern. Bei Rundhölzern (z.B. Masten) wird bei einer Perforation von 3 cm eine gleichmäßige Eindringung, z.B. bei Verwendung von Chrom-Kupfer-Bor-Salzen erreicht. Der perforierte Bereich der Hölzer wird in besonders gefährdetem Bereich der Erd-Luftzone eingebaut. Die perforierte Zone reagiert empfindlich auf verminderte Eindringfähigkeit eines Holzschutzmittels und ist deshalb ein Maß, um das Eindringvermögen eines wäßrigen Holzschutzmittels zu ermitteln.

Für einen lang anhaltenden Holzschutz bei Masten und anderen Rundhölzern mit Erdkontakt besteht die Forderung, daß nach Auswaschung der Grenzwert der fungiziden Wirkung gegenüber Basidiomyceten-Pilzen im zweiten Zentimeter (von der Oberfläche gerechnet) im Erd-Luftbereich erreicht sein muß.

Für die Prüfung der Holzschutz-Wirksamkeit blieben die imprägnierten Rundhölzer für eine ausreichende Fixierung vier Wocher liegen. Dann wurden aus dem perforierten Bereich 5 cm breite Mastscheiben ausgeschnitten. Aus diesen Mastscheiben wurden dann Holzklötzchen zur Pilzprüfung mit den Abmessungen 1,5 × 2,5 × 5 cm entnommen. Die Entnahme der Klötzchen erfolgte im Abstand 0; 0,5; 1,0 cm von der Oberfläche, d.h. hierdurch wurde der imprägnierte Bereich 0 bis 1,5 cm; 0,5 bis 2,0 cm; 1,0 bis 2,5 cm erfaßt. Die entnommenen Klötzchen dienen der Messung des Eindringvermögens des Holzschutzmittels und damit gleichzeitig auch der Wirksamkeit. An ihnen kann durch biologische Prüfung der Wirksamkeit festgestellt werden, ob die Eindringtiefe des Holzschutzmittels ausreichend ist, um die o.g. Forderung — Schutz gegen Basidiomyceten-Pilze nach Auswaschung im zweiten Zentimeter — zu erfüllen. Die klötzchen wurden deshalb ausgewaschen und anschließend gegen die holzzerstörenden Basidiomyceten Coniophora puteana und Poria monticola geprüft. Der Grad der Zerstörung wurde beurteilt.

II Versuchsbeispiele

O keine Zerstörung
+ geringfügiger Angriff
++ mittlerer Angriff
+++ starker Angriff
++++ vollkommen zerstört

Beispeil I — Versgleichsbeispiel (nicht erfindungsgemäß)

25% Cu-HDO
15% Diäthylentriamin(2,2'-Diaminodiethylamin)
60% Wasser

20 g dieser Mischung mit Wasser auf 1 Liter Lösung verdünnt, nachstehend als Anwendungskonzentration 2% bezeichnet.

Pilzprüfung nach Auswaschung:

| Perforierter Bereich Tiefe | Grad der Zerstörung Coniophora puteana | Poria monticola |
|---|---|---|
| 0—1,5 cm | + | O |
| 0,5—2,0 cm | ++ | + |
| 1,0—2,5 cm | ++++ | +++ |

Beispiel 2 (erfindungsgemäß)
25,0% Cu-HDO
22,5% Diäthlentriamin
12,5% Nitrilotriessigsäure
40,0% Wasser

Anwendungskonzentration 2,0%.

Pilzprüfung nach Auswaschung:

| Perforierter Bereich Tiefe | Grad der Zerstörung Coniophora puteana | Poria monticola |
|---|---|---|
| 0—1,5 cm | O | O |
| 0,5—2,0 cm | O | O |
| 1,0—2,5 cm | O | O |

Beispiel 3
25,0% Cu-HDO
30,0% Dipropylentriamin
12,5% Nitrilotriessigsäure
12,5% Borsäure
20,0% Wasser

Anwendungskonzentration 2,0%.

Pilzprüfung nach Auswaschung:

| Perforierter Bereich Tiefe | Grad der Zerstörung Coniophora puteana | Poria monticola |
|---|---|---|
| 0—1,5 cm | O | O |
| 0,5—2,0 cm | O | O |
| 1,0—2,5 cm | + | O |

Beispiel 4
25,0% Cu-HDO
12,5% Diäthylentriamin
12,5% Ethanolamin
12,5% Borsäure
12,5% Nitrilotriessigsäure
25,0% Wasser

Anwendungskonzentration 2,0%.

Pilzprüfung nach Auswaschung:

| Perforierter Bereich Tiefe | Grad der Zerstörung Coniophora puteana | Poria monticola |
|---|---|---|
| 0—1,5 cm | O | O |
| 0,5—2,0 cm | O | O |
| 1,0—2,5 cm | O | + |

4

Beispiel 5

25,0% Cu-HDO
17,5% Diäthylentriamin
5,0% Ethanolamin
12,5% Weinsäure
12,5% Borsäure
27,5% Wasser

Anwendungskonzentration 2,0%.

Pilzprüfung nach Auswaschung:

| Perforierter Bereich Tiefe | Grad der Zerstörung Coniophora puteana | Poria monticola |
|---|---|---|
| 0—1,5 cm | O | O |
| 0,5—2,0 cm | O | O |
| 1,0—2,5 cm | + | + |

Beispiel 6

25,0% Cu-HDO
12,5% Dipropylentriamin
15,0% Aminoethylethanolamin
12,5% Nitrilotriessigsäure
12,5% Borsäure
22,5% Wasser

Anwendungskonzentration 2,0%.

Pilzprüfung nach Auswaschung:

| Perforierter Bereich Tiefe | Grad der Zerstörung Coniophora puteana | Poria monticola |
|---|---|---|
| 0—1,5 cm | O | O |
| 0,5—2,0 cm | O | O |
| 1,0—2,5 cm | O | O |

Die erfindungsgemäßen Holzschutzmittel mit Cu-HDO sind flüssige, mehr oder weniger viskose Konzentrate, die auch bei 0°C stabil sind und nicht auskristallisieren.

Es kann auch Isopropanolamin in Mischung mit den Polyaminen eingesetzt werden, aus wirtschaftlichen Gründen empfiehlt sich jedoch der Einsatz von Ethanolamin.

Die erfindungsgemäßen Mischungen können durch wasserlösliche Kontrollfarbstoffe eingefärbt werden, wasserunlösliche Farbstoffe können gelöst in Lösungsmitteln oder zusammen mit Emulgatoren als Farbstoffemulsionen verwendet werden.

Die erfindungsgemäßen Holzschutzmittel können gegebenenfalls übliche zusätzliche Bestandteile wie Korrosionsinhibitoren, z.B. Isononansäure bzw. deren Salze enthalten.

## Patentansprüche

1. Holzschutzmittel auf der Grundlage einer wasserverdünnbaren Zubereitung der Verbindung Di-(N-cyclohexyldiazeniumdioxy)-Kupfer und eines Polyamines, dadurch gekennzeichnet, daß das Holzschutzmittel 5 bis 50% (Gew.-%) Di-(N-cyclohexyldiazeniumdioxy)-Kupfer, 5 bis 40% eines Polyamins und 5 bis 30% Milchsäure oder Weinsäure oder Nitrilotriessigsäure oder deren Mischung enthält, so daß sich beim Verdünnen des Mittels mit Wasser auf eine Konzentration von 0,3 bis 1,5% (Gew.-%) Di-(N-cyclohexyldiazeniumdioxy)-Kupfer in der wäßrigen Lösung ein pH-Wert von mindestens 7,5 einstellt.

2. Holzschutzmittel nach Anspruch 1, dadurch gekennzeichnet, daß es zusätzlich ein Alkanolamin enthält.

3. Holzschutzmittel nach Anspruch 1, dadurch gekennzeichnet, daß es zusätzlich Ethanolamin enthält.

4. Holzschutzmittel nach Anspruch 1, dadurch gekennzeichnet, daß es zusätzlich ein borsaures Salz oder Borsäure enthält.

5. Holzschutzmittel nach Anspruch 1, dadurch gekennzeichnet, daß es zusätzlich ein quartäres Ammoniumsalz der Formel $(R^1R^2R^3R^4N)^+Z^-$ enthält, in der

$R^1$ einen Alkyrest mit 8 bis 20 Kohlenstoffatomen, einen Alkenylrest mit 12 bis 20 Kohlenstoffatomen oder einen Benzylrest bedeutet, der gegebenenfalls durch $C_1$—$C_{20}$-Alkyl oder Halogen substituiert ist,

$R^2$ $C_1$—$C_6$-Alkyl,
$R^3$ $C_1$—$C_6$-Alkyl,
$R^4$ $C_1$—$C_{20}$-Alkyl bedeuten
oder je zwei der Reste $R^1$ bis $R^4$ zusammen mit dem Stickstoffatom einen heterocyclischen Rest bilden, der 4 bis 5 C—Atome, 1 bis 2 N—Atome und eine oder zwei Doppelbindungen enthält, wobei die Kohlenstoffatome gegebenenfalls durch $C_1$—$C_4$-Alkyl oder Halogen substituiert sind und Z einen Säurerest bedeutet.

6. Verfahren zur Druckimprägnierung von Holz, dadurch gekennzeichnet, daß man eine wäßrige Lösung eines Holzschutzmittels gemäß Anspruch 1 verwendet, die einen pH-Wert von mindestens 7,5 hat.

7. Verfahren zur Herstellung einer Imprägnierlösung für die Druckimprägnierung von Holz, dadurch gekennzeichnet, daß man ein Holzschutzmittel gemäß Anspruch 1 mit Wasser verdünnt oder ein Konzentrat von Di-(N-cyclohexyldiazeniumdioxy)-Kupfer mit einem Polyamin oder einer Carbonsäure gemäß Anspruch 1 mit Wasser verdünnt und den pH-Wert der Imprägnierlösung durch Zusatz eines Polyamins oder einer Carbonsaüre gemäß Anspruch 1 auf mindestens 7,5 einstellt.

**Revendications**

1. Agent de protection du bois, à base d'une composition diluable à l'eau du composé cuivre-di-(dioxyde de N-cyclohexyldiazénium) [di-(N-cyclohexyldiazéniumdioxy)-cuivre] et d'une polyamine, caractérisé par le fait que l'agent de protection du bois contient de 5 à 50% en poids de cuivre-di-(dioxyde de N-cyclohexyldiazénium) [di-(N-cyclohexyldiazéniumdioxy)-cuivre], de 5 à 40% d'une polyamine et de 5 à 30% d'acide lactique ou d'acide tartrique ou d'acide nitrilotriacétique ou d'un mélange de ces composés, de sorte qu'à la dilution du produit par l'eau à une concentration de 0,3 à 1,5% en poids de Cu-HDO dans la solution aqueuse, il s'établisse un pH d'au moins 7,5.

2. Agent de protection du bois selon la revendication 1, caractérisé par le fait qu'il contient en outre une alcanolamine.

3. Agent de protection du bois selon la revendication 1, caractérisé par le fait qu'il contient en outre de l'éthanolamine.

4. Agent de protection du bois selon la revendication 1, caractérisé par le fait qu'il contient en outre un sel de l'acide borique ou de l'acid borique lui-même.

5. Agent de protection du bois selon la revendication 1, caractérisé par le fait qu'il contient en outre un sel d'ammonium quaternaire de formule

$$(R^1R^2R^3R^4N)^+Z^-$$ dans laquelle

$R^1$ représente un groupe alkyle en $C_8$—$C_{20}$, alcényle en $C_{12}$—$C_{20}$ ou benzyle, éventuellement substitué par des groups alkyle en $C_1$—$C_{20}$ ou des halogènes,
$R^2$ représente un groupe alkyle en $C_1$—$C_6$,
$R^3$ représente un groupe alkyle en $C_1$—$C_6$,
$R^4$ représente un groupe alkyle en $C_1$—$C_{20}$,
ou bien encore deux des groupes $R^1$ à $R^4$ forment ensemble et avec l'atome d'azote un hétérocycle contenant 4 à 5 atomes de carbone, 1 à 2 atomes d'azote et une ou deux doubles liaisons, les atomes de carbone étant èventuellement substitués par des groupes alkyle en $C_1$—$C_4$ ou des halogènes, et Z représente un radical d'acide.

6. Procédé pour l'imprégnation du bois sous pression, caractérisé par le fait qu'on utilise une solution aqueuse d'un agent de protection du bois selon la revendication 1, ayant un pH d'au moins 7,5.

7. Procédé pour la préparation d'une solution pour l'imprégnation du bois sous pression, caractérisé par le fait que l'on dilue par l'eau un agent de protection du bois selon la revendication 1 ou bien on dilue par l'eau un concentré de cuivre-di-(dioxyde de N-cyclohexyldiazénium) [di-(N-cyclohexyldiazéniumdioxy)-cuivre], d'une polyamine ou d'un acide carboxylique selon la revendication 1, et on règale le pH de la solution d'imprégnation à au moins 7,5 par addition d'une polyamine ou d'un acide carboxylique selon la revendication 1.

**Claims**

1. A wood preservative based on a water-dilutable formulation of the compound di(N-cyclohexyl-diazeniumdioxy)-copper and a polyamine, wherein the wood preservative contains from 5 to 50% by weight of di(N-cyclohexyldiazeniumdioxy)-copper, from 5 to 40% by weight of a polyamine and from 5 to 30% by weight of lactic acid or tartaric acid or nitrilotriacetic acid or a mixture thereof, such that, when the preservative is diluted with water to a concentration of from 0.3 to 1.5% by weight of di(N-cyclohexyl-diazeniumdioxy)-copper, the pH of the aqueous solution is not less than 7.5.

2. A wood preservative as claimed in claim 1, which additionally contains an alkanolamine.

3. A wood preservative as claimed in claim 1, which additionally contains ethanolamine.

4. A wood preservative as claimed in claim 1, which additionally contains a borate or boric acid.

5. A wood preservative as claimed in claim 1, which additionally contains a quaternary ammonium salt of the formula $(R^1R^2R^3R^4N)^+Z^-$ where

$R^1$ is alkyl of 8 to 20 carbon atoms, alkenyl of 12 to 20 carbon atoms or benzyl which is unsubstituted or substituted by $C_1-C_{20}$-alkyl, or two of the radicals $R^1$ to $R^4$ together with the nitrogen atom form a heterocyclic radical which contains 4 or 5 carbon atoms, 1 or 2 nitrogen atoms and one or two double bonds, the carbon atoms being unsubstituted or substituted by $C_1-C_4$-alkyl or halogen, and Z is an acid radical.

6. A process for pressure impregnation of wood, wherein an aqueous solution of a wood preservative as claimed in claim 1 is used which has a pH of not less than 7.5.

7. A process for the preparation of an impregnating solution for the pressure impregnation of wood, wherein a wood preservative as claimed in claim 1 is diluted with water, or a concentration of di(N-cyclohexyldiazeniumdioxy)-copper and a polyamine or a carboxylic acid as claimed in claim 1 is diluted with water, and the pH of the impregnating solution is brought to not less than 7.5 by adding a polyamine or a carboxylic acid as claimed in claim 1.